**Europäisches Patentamt**

**European Patent Office**

**Office européen des brevets**

(11) Veröffentlichungsnummer: **0 185 856**

**B1**

(12) # EUROPÄISCHE PATENTSCHRIFT

(45) Veröffentlichungstag der Patentschrift:
31.08.88

(51) Int. Cl.⁴: **B 60 K 37/00**

(21) Anmeldenummer: **85111974.3**

(22) Anmeldetag: **21.09.85**

(54) **Kraftfahrzeug-Windlauf-Armaturenbrett-Bauteil aus Kunststoff mit integrierter Belüftungs- und Heizungsanlage.**

(30) Priorität: **22.12.84 DE 3447185**

(43) Veröffentlichungstag der Anmeldung:
**02.07.86 Patentblatt 86/27**

(45) Bekanntmachung des Hinweises auf die Patenterteilung:
**31.06.88 Patentblatt 88/35**

(84) Benannte Vertragsstaaten:
**DE FR GB IT SE**

(56) Entgegenhaltungen:
**DE-A-2 813 909**
**GB-A-2 074 515**
**GB-A-2 139 749**

(73) Patentinhaber: **FORD- WERKE AKTIENGESELLSCHAFT, Ottoplatz 2 Postfach 21 03 69, D-5000 Köln 21 (DE)**

(84) Benannte Vertragsstaaten: **DE IT SE**

(73) Patentinhaber: **FORD MOTOR COMPANY LIMITED, Eagle Way, Brentwood Essex CM13 3BW (GB)**

(84) Benannte Vertragsstaaten: **GB**

(73) Patentinhaber: **FORD FRANCE SOCIETE ANONYME, 344 Avenue Napoléon Bonaparte B.P. 307, F-92506 Rueil Malmaison Cedex (FR)**

(84) Benannte Vertragsstaaten: **FR**

(72) Erfinder: **Lorenz, Siegfried, Halfmannstrasse 44, D-5020 Frechen 3 (DE)**
Erfinder: **Altdorf, Erich, Am Wolfsgarten 12, D-5000 Köln 90 (DE)**
Erfinder: **Vogt, Hans, Kielsberg 36, D-5063 Overath (DE)**

(74) Vertreter: **Ritzkowsky, Harald, Dipl.- Ing., Ford-Werke Aktiengesellschaft Patentabteilung Z/DRR- 2 Ottoplatz 2, D-5000 Köln 21 (DE)**

## Beschreibung

Die Erfindung bezieht sich auf ein Kraftfahrzeug-Windlauf-Armaturenbrett-Bauteil aus Kunststoff mit integrierter Belüftungs- und Heizungsanlage der im Oberbegriff des Patentanspruchs 1 erläuterten Art.

Aus der DE-A-3 119 572 ist ein Kraftfahrzeug-Windlauf-Armaturenbrett-Bauteil aus Kunststoff mit teilweise integrierter Belüftungs- und Heizungsanlage bekannt, das aus einem sich zwischen den Karosserieinnenwänden erstreckenden ersten Bauteil mit angeformten Mulden und Wänden zur Aufnahme von Komponenten der Heizungs- und Belüftungsanlage und einem sich gleichfalls zwischen den Innenwänden erstreckenden zweiten Bauteil mit komplementär ausgeformten Mulden und Wänden besteht und wobei die aneinanderliegenden beiden Bauteile Räume und Kanäle von bestimmten Verlauf bilden und wobei das Windlauf-Armaturenbrett-Bauteil, bestehend aus dem ersten und zweiten Bauteil, mit den entsprechenden Komponenten der Belüftungs- und Heizungsanlage sowie weiteren abdeckenden Bauteilen vervollständigt als vormontiertes Bauteilelement in die Karosserie eingesetzt und über seitliche Flansche mit den Karosserieinnenwänden verbunden wird.

Das bekannte Windlauf-Armaturenbrett-Bauteil weist hierbei den Nachteil auf, daß nur das erste Bauteil aus einem Kunststoff mit höherer mechanischer Festigkeit besteht, wohingegen das zweite Bauteil aus einem geringere mechanische Festigkeit aufweisenden Kunststoff besteht, um die erforderliche Nachgiebigkeit einer zum Fahrgastraum hinweisenden Armeturenbrettabdeckung mit übernehmen zu können. Die beiden zusammengefügten ersten und zweiten Bauteile können sich somit festigkeitsmäßig kaum ergänzen und dementsprechend kann die Befestigung des Bauteilelements an der Karosserie nicht zu einer Querverstärkung der Karosserie beitragen sondern dient nur zum Halten des Bauteilelements. Aus der DE-A-3 143 503 ist ein weiteres Windlauf-Armaturenbrett-Bauteil aus Kunststoff mit integrierter Belüftungs- und Heizungsanlage bekannt, wobei ein vervollständigtes vormontiertes Bauteilelement aus vier einzelnen Bauteilen besteht, die entlang unterschiedlicher Trennebenen miteinander verbunden werden. Das vervollständigte, vormontierte Bauteilelement stützt sich hierbei in der Karosserie über zwischengeschaltete Dichtungselemente an einem oberen und einem mittleren Karosseriequerträger ab, die für eine Querversteifung der Karosserie sorgen, während das Bauteilelement an diesem nur gehalten wird.

Aus der EP-A-0 081 656 ist eine Baueinheit für den Cockpit-Bereich eines Kraftfahrzeuges bekannt, die aus einer Vielzahl von miteinander verbundenen vormontierten Bauteilen besteht, die dann als vervollständigte und überprüfte Baueinheit in die Karosserie eingesetzt und an der Spritzwand der Karosserie befestigt wird.

Auch diese Baueinheit trägt nur ihre eigenen Komponenten und dient nicht zur Verstärkung der Karosseriestruktur.

Die Aufgabe der Erfindung ist es, ein Kraftfahrzeug-Windlauf-Armaturenbrett-Bauteil aus Kunststoff mit integrierter Belüftungs- und Heizungsanlage der im Oberbegriff des Patentanspruchs 1 erläuterten Art derart zu verbessern, daß die zwei miteinander verklebten Bauteile einen kastenförmigen Querträger bilden, der durch eine entsprechende kraft- und formschlüssige Befestigung an den Karosserieinnenwänden zu einer Längs-, Quer- und Torsionsversteifung der Karosseriestruktur maßgeblich beiträgt und darüberhinaus alle erforderlichen Belüftungs- und Heizungs- oder Klimaanlagen-Aggregate in vollintegrierter Form aufnimmt.

Weiterhin kann der aus den zwei verklebten Bauteilen gebildete großvolumige kastenförmige Querträger derart ausgelegt werden, daß er im Falle eines Frontaufpralles für das zurückdrängende Antriebsaggregat eine kontrolliert verformbare Barriere bildet.

Gemäß der Erfindung wird diese Aufgabe gelöst, indem ein Kraftfahrzeug-Windlauf-Armaturenbrett-Bauteil aus Kunststoff mit integrierter Belüftungs- und Heizungsanlage der im Oberbegriff des Patentanspruchs 1 beschriebenen Art die im Kennzeichenteil des Patentanspruchs 1 aufgezeigten Merkmale aufweist.

In den Ansprüchen 2 bis 13 sind zweckmäßige Ausgestaltungen der Erfindung aufgezeigt.

Dadurch, daß sowohl das erste Bauteil als auch das zweite Bauteil als faserverstärkte Hartschaum-Formteile ausgebildet sind und in ihren vorderen Bereichen entlang einer etwa horizontalen Trennebene und in ihren hinteren Bereichen entlang einer abgewinkeltansteigenden Trennebene aneinanderliegen und miteinander fest verbunden einen kastenförmigen Querträger bilden, der über an den in der horizontalen Trennebene liegenden seitlichen Rändern ausgebildeten Wulst- oder Keilkanten die in einen entsprechenden Querschnitt aufweisen den Kanalführungen, die an den Karosserie-Innenwänden vorgesehen sind, etwa horizontal eingeschoben aufgenommen werden, kräfteübertragend mit der Karosseriestruktur verbunden ist, kann das Gewicht des ansonsten erforderlichen Schließbleches von Stirnwand zum Winlauf eingespart werden, da das erfindungsgemäße Bauteilelement die Versteifung der Karosseriestruktur übernimmt und im Falle eines Frontaufpralls kann das zurückdrängende Antriebsaggregat durch kontrollierte Verformung des Bauteilelementes abgefangen werden.

Dadurch, daß an den beiden miteinander verbundenen Bauteilen ein an sich bekannter mit einer Lenksäulenanordnung und einer Pedalanordnung vormontierter Pedalbock über eine erste Befestigungslasche festgelegt und nach Einsetzen der beiden verbundenen Bauteile in die Karosseriestruktur über eine zweite Befestigungslasche oben am Windlauf und unten an der Spritzwand alternative über den Befestigungsflansch des Pedalbockes befestigt wird, wird auf einfache Weise eine gemeinsame Montage des Kraftfahrzeug-Windlauf-Armaturenbrett-Bauteiles mit den Bedienungsorganen der Lenksäulen- und Pedalanordnung ermöglicht.

Dadurch, daß im tragenden Bauteil ein Querträger ingetriert ist, kann an diesem eine an sich bekannte Lenksäulenanordnung und ein separater Pedalbock einfach und sicher vormontiert werden.

Dadurch, daß an der obenliegenden Seite des ersten Bauteiles das Gebläsegehäuseunterteil, das Umluft-Klimaanlage-Gehäuse und der zur Befestigung am Windlauf oben im Bereich vorgesehene Steg und an der untenliegenden Seite die obere Hälfte des Heizungsgehäuses angeformt sind, während an der obenliegenden Seite ein Handschuhkasten und Ablagefächer an geformt sind, wird eine Vielzahl von früher erforderlichen Einzelgehäusen, deren Herstellung und Montage vermieden.

Dadurch, daß zusätzlich zu dem ersten und dem zweiten tragenden Bauteil ein weiteres Bauteil, welches die Gebläseabdeckung bzw. zusätzlich die Umluft-Klimaanlageabdeckung bildet und ein Bauteil, das eine Armaturenbrettabdeckung bildet, hinzugefügt werden, erhält man ein vollständig komplettiertes Windlauf-Armaturenbrett-Bauteil.

Für Bauteile, wie Gebläseabdeckungen oder Luftverteilungsklappen kann vorzugsweise unverstärkter Polyurethan-Hartschaum angewendet werden.

Für die Armaturenbrettabdeckung, die auch ein ansprechendes Äußeres aufweisen muß und den Sicherheitsanforderungen bezüglich eines Kopfaufpralls eines Insassen gerecht werden muß, kann vorzugsweise ein Bauteil mit einer in die Schäumform eingegossenen, ein gefärbten Polyurethan-Integralschaum-Außenhaut in Verbindung mit einem Trägerteil aus faserverstärktem Polyurethan-Hartschaum hergestellt werden, wobei die Außenhaut und der Träger durch Ausschäumen mit einem Stütz- und Polsterschaum auf Polyurethanbasis miteinander verbunden werden, wodurch die erwünschte weiche Griffigkeit der Armaturenbrettabdeckung erreicht wird.

Das aus den miteinander verbundenen Bauteilen gebildete und mit allen einzufügenden Bauteilen und Aggregaten komplettierte Windlauf-Armaturenbrett-Bauteil kann außerhalb des Kraftfahrzeuges auf Funktion überprüft werden, so daß nur als in Ordnung befundene Bauteilelemente zur Montage in der Kraftfahrzeugkarosserie gelangen.

Die Erfindung wird anhand eines in den Zeichnungen gezeigten Ausführungsbeispieles näher erläutert.

Es zeigt:

Fig. 1 einen vertikalen Längsschnitt durch ein Kraftfahrzeug-Windlauf-Armaturenbrett-Bauteil gemäß der Erfindung ;

Fig. 2 eine schematische Darstellung der Verbindung des vervollständigten, vormontierten Bauteilelementes mit benachbarten Karosseriewänden, wobei in Kreisen hervorgehobene Anschlußbereiche vergrößert herausgezeichnet sind;

Fig. 2a und 2b alternative Ausführungen der Hauptverbindungen zu den Karosserie-Innenwänden;

Fig. 3 eine Explosionsdarstellung des ersten Mittelträger-Bauteiles mit sämtlichen darin einsetzbaren Komponenten der Belüftungs-, Heizungs- und Klimaanlage;

Fig. 4 eine Explosionsdarstellung des zweiten Unterträger-Bauteiles mit sämtlichen darin einsetzbaren Komponenten der Belüftungs-, Heizungs- und Klimaanlage;

Fig. 5a und 5b eine Schrägriß-Darstellung der zusammengefügten Bauteile entsprechend Fig. 3 und 4 mit alternativen Ausführungen der Lenksäulen-und Pedalanordnung in unmontierter Lage;

Fig. 6 eine Schrägriß-Darstellung des vollständig komplettierten Windlauf-Aramturenbrett-Bauteiles;

Fig. 6a einen Teilschnitt durch die eine Ausführungsform der Lenksäulen- und Pedalanordnung nach Fig. 5a;

Fig. 6b einen Teilschnitt durch die andere Ausführungsform;

Fig. 7 eine Explosionsdarstellung der Armaturenbrettabdeckung mit den darin einsetzbaren Bauteilen.

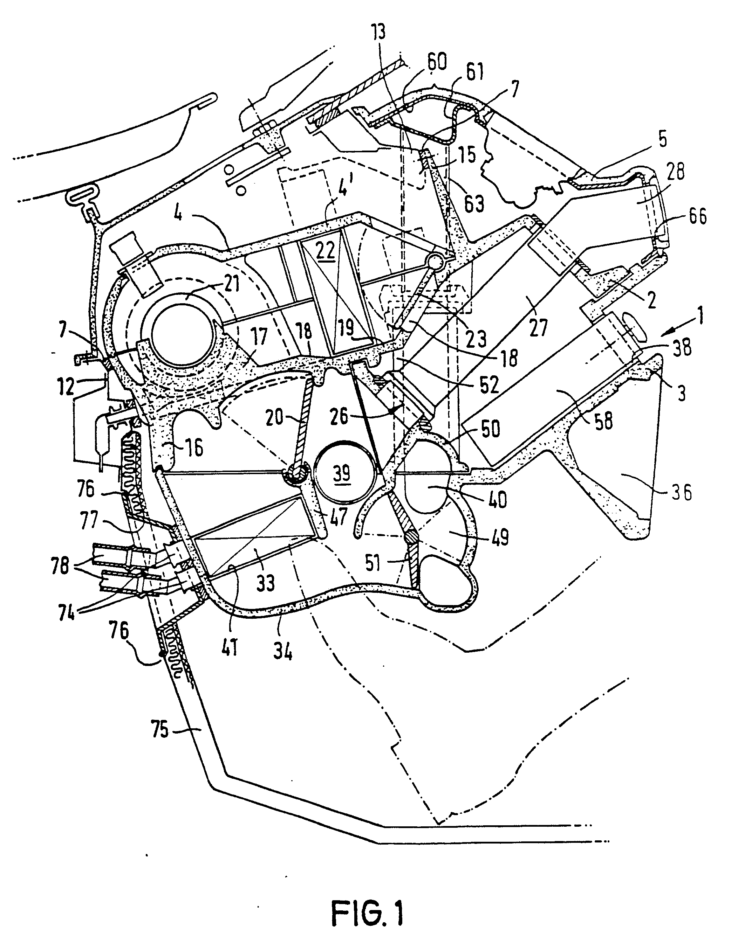

In Fig. 1 ist das Windlauf-Armaturenbrett-Bauteil aus Kunststoff mit integrierter Belüftungs- und Heizungsanlage sowie Klimaanlage mit 1 bezeichnet.

Das Windlauf-Armaturenbrett-Bauteil 1 besteht im Wesentlichen aus etwa vier Bauteilen, einem ersten Mittelträger-Bauteil 2 aus einem aus einer Matte aus Endlosfasern faserverstärktem Polyurethan-Hartschaum, einem zweiten Unterträger-Bauteil 3, gleichfalls aus faserverstärktem Polyurethan-Hartschaum sowie einem dritten Bauteil, einer Gebläseabdeckung 4 aus unverstärktem Polyurethan-Hartschaum und einem vierten Bauteil einer Armaturenbrettabdeckung 5 als Verbundbauteil aus einem Träger aus faserverstärktem Polyurethan-Hartschaum in Verbindung mit einem Stütz- und Füllschaum aus Polyurethan und einer Außenhaut aus einem eingefärbten hautbildenden Polyurethanschaum.

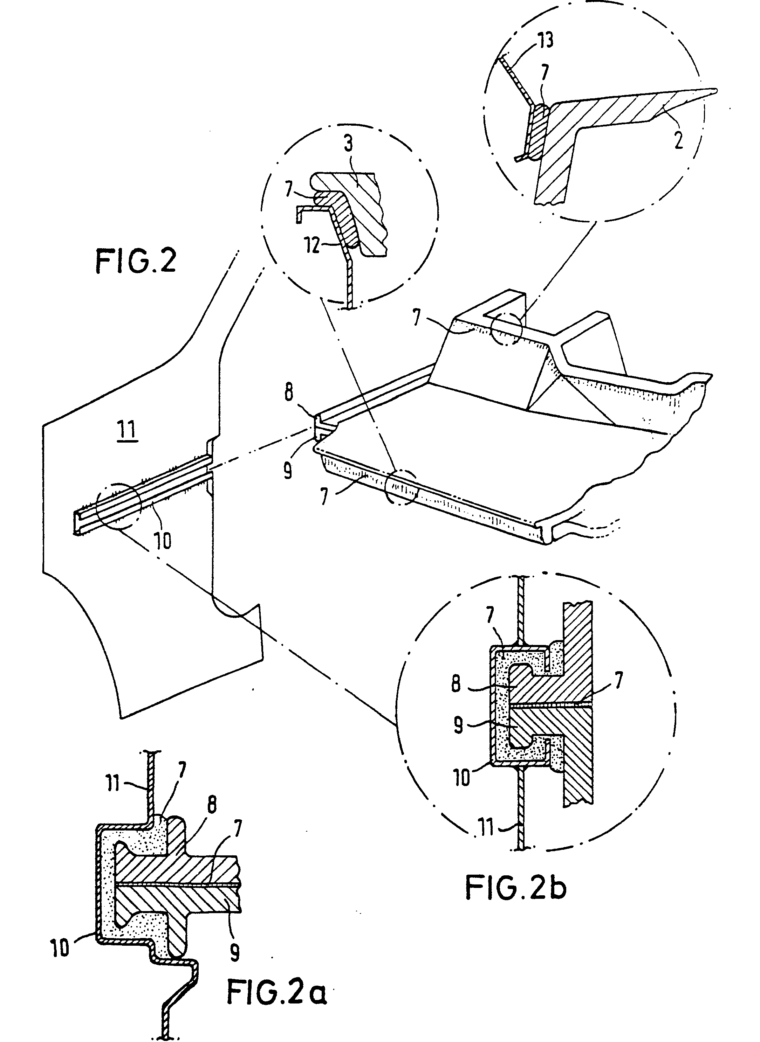

Wie insbesondere aus den Figuren 1, 2, 3 und 4 zu ersehen ist, liegen die tragenden ersten und zweiten Bauteile, der Mittelträger-Bauteil 2 und der Unterträger-Bauteil 3 entlang einer in ihren vorderen Bereichen liegenden etwa horizontalen Trennebene 6 (durch Strich-Punkt-Linien angedeutet) aneinander an. Der Mittelträgerbauteil 2 und der Unterträger-Bauteil 3 sind an ihren in der etwa horizontalen Trennebene 6 liegenden seitlichen Rändern mit Wulst- oder Keilkanten 8 bzw. 9 versehen, die in entsprechenden, einen C- oder schwalbenschwanzförmigen Querschnitt aufweisenden Kanalführungen 10, die an der Karosserie-Innenwand 11 befestigt sind, horizontal eingeschoben aufgenommen werden.

Die beiden tragenden Bauteile, der Mittelträger-Bauteil 2 und der Unterträger-Bauteil 3 werden hierbei entlang ihrer etwa horizontalen Trennebene über eine Dünnbett-Verklebung 7 miteinander fest verbunden wodurch ein steifer kastenförmiger Querträger gebildet wird. Die nunmehr an den Rändern der verbundenen Bauteile 2 und 3 gebildeten doppelseitigen Wulst- oder Keilkanten 8 und 9 werden durch eine Polyurethan-Verklebung 7 derart fest mit an in den Kanalführungen 10 den Karosserie-Innenwänden 11 an der Stirnwand 12 und dem Windlauf 13 über Klebezonen verbunden, daß das erfindungsgemäße Windlauf-Armaturenbrett-Bauteil aus Kunststoff die erforderliche Längs-, Quer- und Torsionsversteifung im Bereich der vorderen Karosserie übernehmen kann, wodurch z. B. das Gewicht für das Schließblech von Stirnwand zum Windlauf in der Blechkarosserie-Struktur eingespart werden kann. Der auf diese Weise gebildete großvolumige kastenförmige Querträger kann hierbei dart ausgelegt werden, daß er bei einem Frontaufprall für das zurückdrängende Antriebsaggregat eine kontrolliert verformbare Barriere bildet.

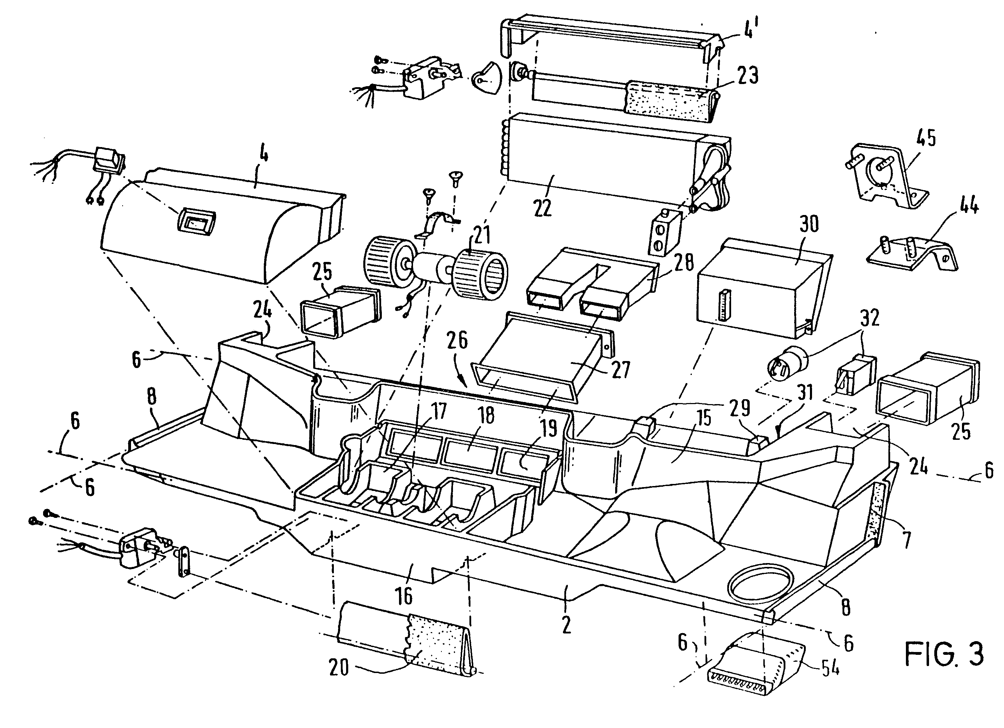

Wie insbesondere aus Fig. 3 zu ersehen ist, weist der Mittelträger-Bauteil 2 eine Vielzahl von ausgeformten Räumen und Wänden auf, die zumindest Teile von bisher erforderlichen Bauteilkomponenten der Belüftungs-, Heizungs- und Klimaanlage bilden.

Im Mittelträger-Bauteil 2 ist bei 16 ein Heizungsgehäuse-Oberteil, bei 17 ein Gebläsegehäuse-Unterteil, bei 18 ein Klimaanlagengehäuse-Unterteil und bei 19 ein Umluftgehäuse-Unterteil ausgebildet. Im Bereich des Heizungsgehäuse-Oberteiles 16 kann in entsprechenden Lageraufnahmen eine Mischklappe 20 eingesetzt werden, im Bereich des Gebläsegehäuse-Unterteiles 17 kann ein komplettes Heizungsgebläse 21 befestigt werden, im Bereich des Klimaanlagengehäuse-Unterteiles 18 kann ein Kältetauscher 22 angeordnet werden und im Bereich des Umluftgehäuse-Unterteiles 19 kann eine Umluftklappe 23 mit den entsprechenden Steuereinrichtungen angeordnet werden. Der Gebläsebereich wird hierbei von einer Gebläseabdeckung 4 und der Bereich der Klimaanlage wird durch eine Abdeckung 4' geschlossen.

Am Mittelträger-Bauteil 2 sind weiterhin Anschlüsse 24 für Seitendüsenkanäle 25 sowie Anschlüsse 26 für Mitteldüsenkanäle 27 und 28 vorgesehen. Weiterhin weist das Mittelträger-Bauteil 2 eine Aufnahme 29 für ein Kombiinstrument 30 sowie Aufnahmen 31 für Elektroschalter 32 auf. Am Mittelträger-Bauteil 2 können hierbei in geeigneter Form die elektrischen Verkabelungen (nicht gezeigt) der angeordneten Komponenten angeordnet sein, wobei vorzugsweise diese Verkabelung in Form von Flachbahnkabeln oder gedruckten flexiblen Schaltungen mit einem Zentralanschlußstecker 54 vorgesehen wird.

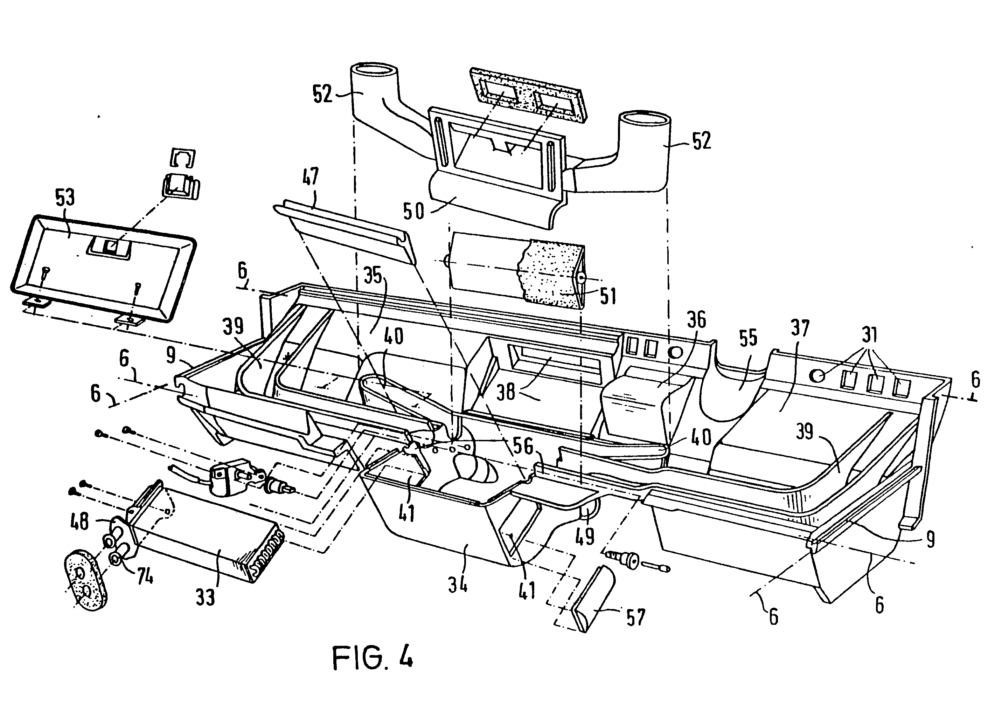

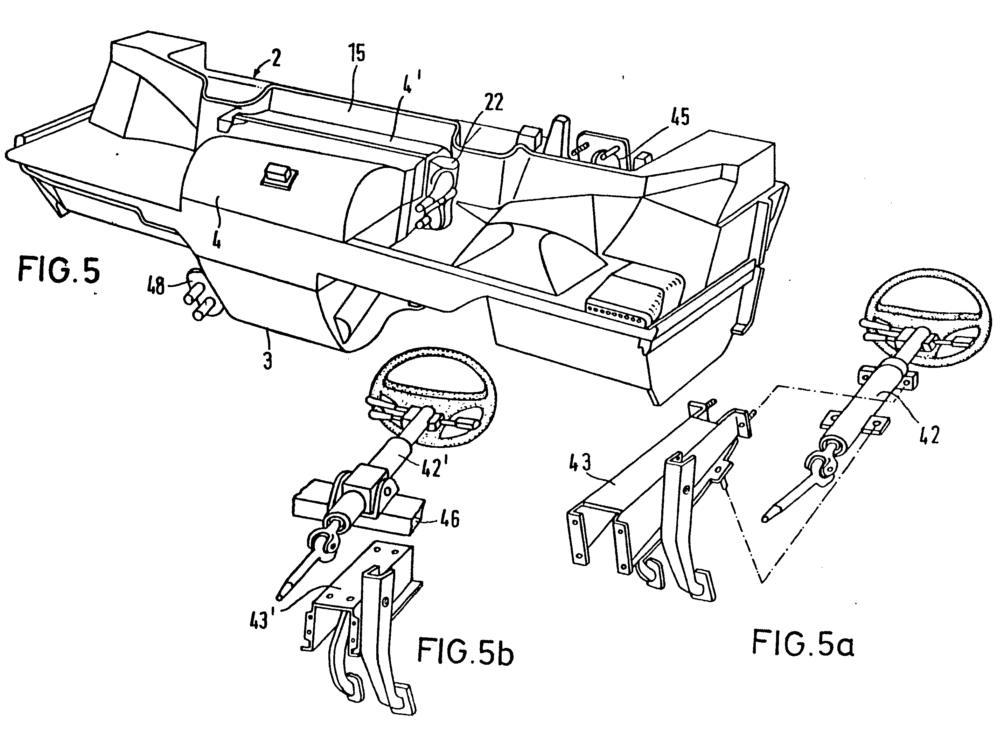

Wie am besten aus Fig. 4 zu ersehen ist, weist der Unterträger-Bauteil 3 eine Vielzahl von Räumen und Wänden ausgeformt auf, die zumindest zum Teil bisher erforderliche Komponenten-Baugruppen bilden. Im Unterträger-Bauteil 3 ist für einen Wärmetauscher 33 bei 34 ein Heizungsgehäuse-Unterteil sowie bei 35 ein Handschuhkasten, bei 36 eine Aufnahme für den Aschenbecher, bei 37 ein Ablagekasten und bei 38 eine Aufnahme für ein Autoradio 58 ausgebildet.

Weiterhin sind am Unterträger-Bauteil 3 Luftkanäle 39 zu den Seitendüsen und Luftkanäle 40 zu den Defrosterdüsen ausgebildet. Weiterhin ist im Unterträger-Bauteil 3 eine Aufnahme 55 zur Anordnung der Lenksäulenanordnung 42 des Kraftfahrzeuges vorgesehen.

Die Lenksäulenanordnung 42 besteht aus einer vormontierten Baueinheit, in der die Lenksäulenverkleidung und deren Befestigung, die Lenkwelle, die an der Lenksäulenverkleidung angeordneten Schalter und das Lenkrad angeordnet sind.

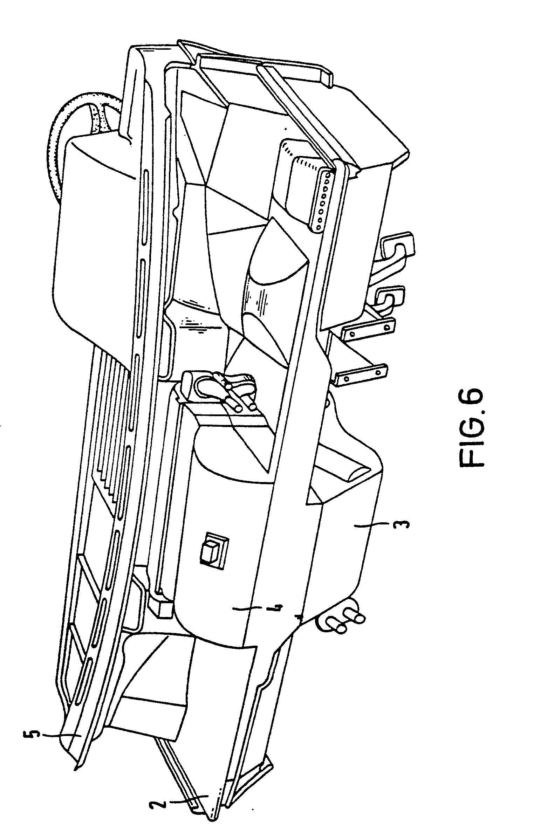

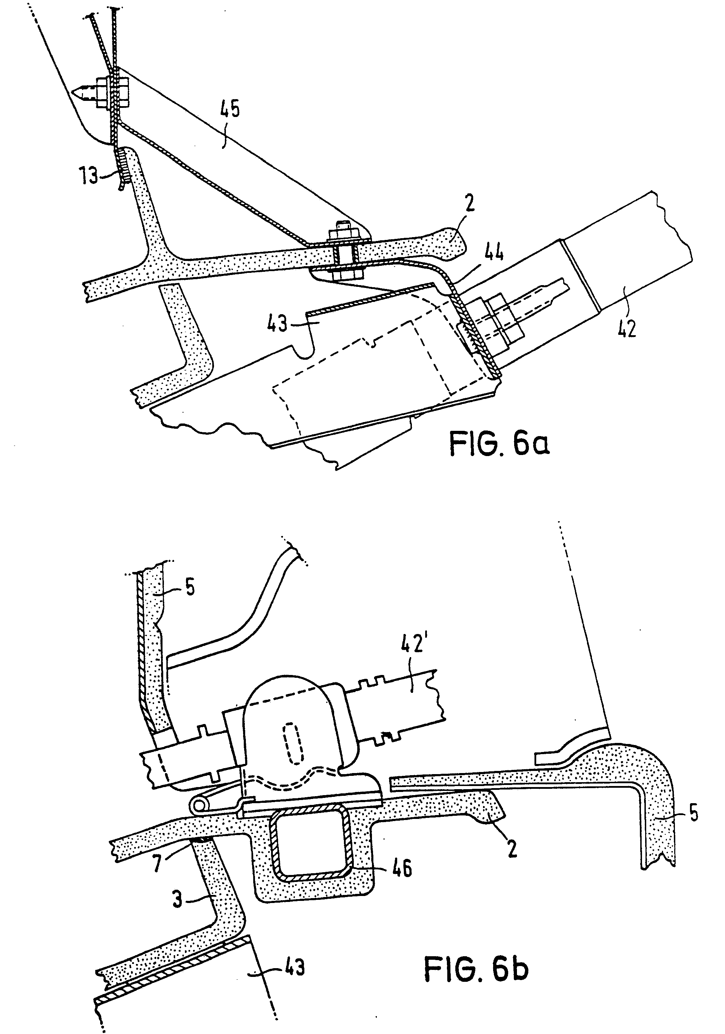

Nach einer Ausführungsform (Fig. 6a) ist die Lenksäulenanordnung 42 an einem Pedalbock 43 befestigt, der im wesentlichen aus einer U-förmigen Blechkonsole besteht, zwischen deren Schenkel die entsprechenden Pedale für die Bedienung des Kraftfahrzeuges Vormontiert angeordnet sind. Die miteinander montierte Lenksäulenanordnung 42 und die Pedalanordnung 43 wird über eine erste Befestigungslasche 44 in Verbindung mit einer zweiten Befestigungslasche 45 an den miteinander verbundenen Bauteilen 2 und 3 befestigt, derart, daß das tragende Bauteilelement die Lenksäulenanordnung 42 und die Pedalanordnung 43 trägt bis das Bauteilelement in die Karoseriestruktur eingesetzt wird und der Pedalbock 43 am Spritzblech und die zweite Befestigungslasche 45 zusätzlich oben am Windlauf befestigt wird.

In einer anderen Ausführungsfom (Fig. 6b) ist die Lenksäulenanordnung 42' auf einem Querträger 46 montiert, der im Bauteil 2 integriert ist, während die Pedalanordnung 43' in einem getrennten Pedalbock angeordnet ist, der am Bauteil 2 und an der Spritzwand befestigt wird.

Im Heizungsgehäuse-Unterteil 34 wird in entsprechenden Aufnahmen 56 eine Heizungszwischenwand 47 angeordnet gegen die ein durch seitliche Öffnungen 41 ein- und ausbaubarer Wärmetauscher 33 anliegt, wobei das Heizungsgehäuse-Unterteil 34 an der einen Seite durch die Anschlußplatte 48 des Wärmetauschers 33 und an der anderen Seite durch einen Verschlußdeckel 57 geschlossen wird.

Wie an sich üblich, ist im Heizungsgehäuse-Unterteil 34 ein Luftverteilungsgehäuse 49 ausgebildet, das in Verbindung mit einem getrennten, eingesetzten Luftverteilungsgehäuse 50 und einer eingesetzten Luftverteilungsklappe 51 die Luftverteilung zwischen dem Fußraum und den Defrosterdüsen und Mitteldüsen steuert. Das Luftverteilungsgehäuse 50 ist hierbei mit an geformten oder angesetzten Verteilungskanälen 52 zu den Defrosterdüsen versehen.

Das Unterträger-Bauteil 3 wird hierbei im Bereich des Handschuhkastens 35 durch eine Handschuhkastenklappe 53 mit den entsprechenden Scharnier- und Schloßeinrichtungen verschlossen, im Bereich der Aschenbecheraufnahme 36 kann ein Aschenbecher (nicht gezeigt) eingesetzt werden, der Bereich des Ablagekastens 37 bleibt offen und in die Autoradioaufnahme 38 kann ein entsprechendes Radiogerät 58 (siehe Fig. 1) eingesetzt werden.

Der Unterträger-Bauteil 3 kann weiterhin Aufnahmen 31 für eine Vielzahl von elektrischen Schaltern aufweisen, wie sie üblicherweise an der Unterkante eines Armaturenbrettes angeordnet sind. Die entsprechende elektrische Verkabelung zwischen den am Unterträger-Bauteil 3 montierten Komponenten kann wieder in Form von Flachleitungen oder gedruckten Schaltungen vorgesehen werden.

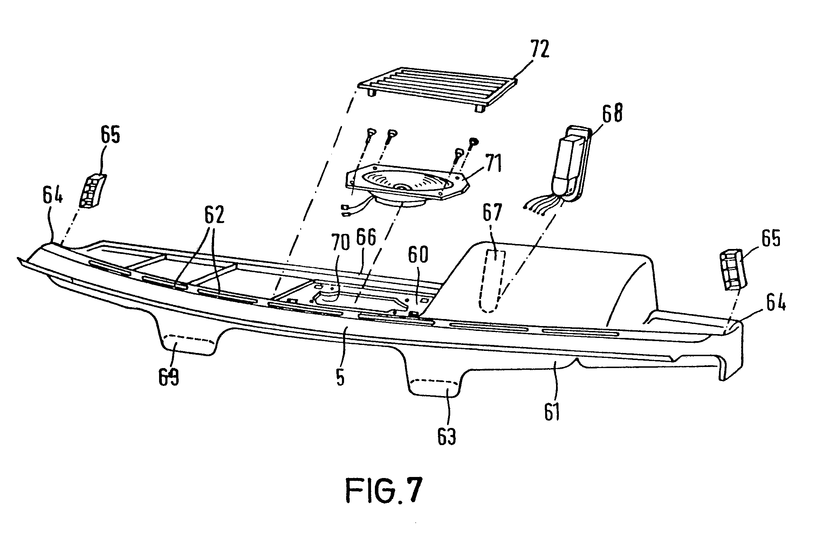

Wie am besten aus Fig. 7 in Verbindung mit Fig. 1 rechts oben zu ersehen ist, bildet die Armaturenbrettabdeckung 5 mit einem innenliegenden Trägerteil 60 aus faserverstärktem Polyurethan-Hartschaum, einem Luftverteilungskanal 61, der zu Defrosterdüsen 62 führt und der über Anschlußstutzen 63 von den Luftkanälen 52 des im Unterteil-Bauteil 3 eingesetzten Luftverteilergehäuses 50 versorgt werden. Im seitlichen Bereich der Armaturenbrettabdeckung 5 sind Aufnahmen 64 für Seitendüsen 65 vorgesehen, die gleichfalls über den eingeformten Luftleitkanal 61 versorgt werden. Weiterhin sind in der Armaturenbrettabdeckung 5 Aufnahmen 66 für Mitteldüsen 28 vorgesehen, die unmittelbar über die Luftkanäle 27 und 28 vom Mischraum der Heizungsanlage versorgt werden. Weiterhin weist die Armaturenbrettabdeckung 5 eine Aufnahme 67 für eine Bedieneinheit 68 für die Belüftungs-, Heizungs- und Klimaanlage auf.

Das Trägerteil 60 der Armaturenbrettabdeckung 5 weist weiterhin eine Aufnahme 70 für einen Lautsprecher 71 auf, der in üblicher Weise von einem Abdeckgitter 72 abgedeckt wird.

Der Trägerteil 60 der Armaturenbrettabdeckung 5 ist hierbei von einem Stütz- und Füllschaum umschäumt, der in Verbindung mit einer unmittelbar in die Schäumform eingebrachten, eingefärbten hautbildenden Polyurethanmischung die gepolstert wirkende Außenkontur der Armaturenbrettabdeckung 5 bildet. Die Festigkeit des Trägerteiles 60 aus einem aus einer Matte aus Endlosfasern faserverstärktem Polyurethan-Hartschaum kann hierbei durch entsprechende Formgebung so gezielt gesteuert werden, daß die Armaturenbrettabdeckung die Sicherheitsanforderungen für den Fall eines Kopfaufpralls eines Insassen voll erfüllen kann.

Da das aus den beiden zusammengefügten Bauteilen und der Vielzahl von darin angeordneten Aggregaten gebildete Bauteilelement vollständig komplettiert in die Karosseriestruktur eingesetzt und mit dieser tragend und fest verbunden wird, muß für den gegebenenfalls erforderlichen Austausch von Aggregaten, die erfahrungsgemäß einen Verschleiß oder anderen Funktionsproblemen unterliegen, eine Austauschmöglichkeit geschaffen werden.

Bei diese Aggregaten handelt es sich in erster Linie um die Kälte- und Wärmetauscheraggregate 22 und 33 und das Gebläse 21. In Verbindung mit Fig. 1 wird erläutert, wie der Austausch solcher schadhafter Aggregate erfolgen kann.

Ein Austausch des Geblöses 21 ist verhältnismässig einfach durch Abnahme der Gebläseabdeckung 4 möglich. Ebenso einfach ist ein Austausch des Kältetauschers 22 durch Abnehmen der Umluft-Klimaanlage-Abdeckung 4' möglich.

Die Austauschbarkeit des Wärmetauschers 33 wird auf besondere Weise ermöglicht.

Die Anschlußstutzen 78 des Wärmetauschers 33 ragen über das untere Heizungsgehäuse 34 nur soweit in Richtung der Spritzwand 75, daß sie noch vollständig innerhalb des Fahrgastraumes verbleiben. In der Spritzwand 75 ist eine Öffnung 76 vorgesehen, in der ein becherförmiges Teil 77 derart eingesetzt wird, daß es die Anschlußstutzen 78 des Wärmetauschers 33 über entsprechende Einrichtungen abgedichtet aufnimmt. Damit ist der Fahrgastraum gegenüber dem Motorraum vollständig und dicht abgeschlossen. Der Anschluß des Wärmetauschers 33 an den Kuhlmittelkreislauf des Verbrennungsmotors erfolgt hierbei über an den entsprechenden Kühlmittelschläuchen angebrachten Schlauch-Verbinder 78, die mit den Anschlußstutzen 74 flüssigkeitsdicht und gegen unbeabsichtigtes Lösen gesichert verrastet werden.

Wird nun der Austausch eines Wärmetauschers 33 erforderlich, so werden die Schlauch-Verbinder 78 abgezogen, hierauf das becherförmige Teil 77 abgenommen, wodurch der Wärmteauscher 33 mit den an seiner Anschlußplatte 48 vorragenden Anschlußstutzen 74 seitlich aus der Öffnung 41 entnommen werden kann.

Selbstverständlich können den in Zusammenhang mit den Fig. 3, 4, 5, 6 und 7 erläuterten Hauptbauteilen des Windlauf-Armaturenbrett-Bauteiles gemäß der Erfindung die erwähnten Baukomponenten der Belüftungs-, Heizungs- und Klimaanlage sowie der Lenkungs- und Pedalanordnung im verschiedensten Automationsgrad beigefügt werden, d. h. die entsprechenden Betätigungseinrichtungen für die Steuer-Misch- und Verteilklappen kann einmal in einfacher mechanischer Gestängeverbindung erfolgen, während sie bei einer teuereren Ausstattung in Form von mit den entsprechenden Klappen unmittelbaren verbundenen gesteuerten Schrittschaltmotoren erfolgen kann.

Ebenso ist es klar, daß das komplettierte Windlauf-Armaturenbrett-Bauteil außerhalb des Kraftfahrzeuges auf Funktion überprüft werden kann, so daß nur als in Ordnung befundene Bauteilelemente zur Montage in die Kraftfahrzeugkarosserie gelangen.

Weiterhin ist es selbstverständlich, daß an den miteinander zu verbindenden Bauteilen oder einzusetzenden Bauteilgruppen entsprechende Dichtungsanordnungen in Form von Schaumstoffscheiben oder Schaumstoffbändern angeordnet werden können, wie sie um Teil in den Zeichnungen ohne Angabe von Bezugszeichen gezeigt sind. Das Gleiche gilt für eventuell erfoderliche Befestigungsteile, wie Schrauben, Klammern und dergleichen.

**Patentansprüche**

1. Kraftfahrzeug-Windlauf-Armaturenbrett-Bauteil (1) aus Kunststoff mit integrierter Belüftungs- und Heizungsanlage bestehend aus einem sich zwischen den Karosserie-Innenwänden erstreckenden ersten Bauteil (2) mit angeformten Mulden und Wänden zur Aufnahme von Komponenten der Belüftungs- und Heizungsanlage und einem sich gleichfalls zwischen den Innenwänden erstreckenden zweiten Bauteil (3) mit entsprechend komplementär ausgeformten Mulden und Wänden, die bei Aneinanderliegen der beiden Bauteile Räume und Kanäle von bestimmten Verlauf bilden und wobei das erste (2) und das zweite (3) Bauteil als mit den entsprechenden Komponenten der Belüftungs- und Heizungsanlage (16 - 19) sowie weiteren, abdecken den Bauteilen vervollständigtes, vormontiertes Bauteilelement in die Karosserie eingesetzt und über seitliche Flansche mit den Karosserie-Innenwänden verbunden wird, dadurch gekennzeichnet, daß sowohl das erste Bauteil (2) als auch das zweite Bauteil (3) vorzugsweise als faserverstärkte Polyurethan-Hartschaum-Formteile ausgebildet sind, wobei das erste Bauteil (2) die wesentliche Festigkeitsergänzung der Karosseriestruktur übernimmt und beide Teile in ihren umlaufenden Bereichen mit in einer etwa horizontalen Trennebene (6) liegenden Flächen versehen sind, die aneinanderliegen und miteinander mittels Kleber (7) fest verbunden sind, so daß die beiden Bauteile (2 und 3) einen kastenförmigen Querträger bilden, der an den in der etwa horizontalen Trennebene (6) liegenden seitlichen Rändern mit Wulst- oder Keilkanten (8/9) versehen ist, die in Kanalführungen (10) mit entsprechendem Querschnitt, die an den Karosserie-Innenwänden (11) angeordnet sind, etwa horizontal eingeschoben, aufgenommen wird und durch Ausfüllen der Kanäle (10) mittels reaktiven Kunstharzfügemittels (7) eine formschlüssige, verklebte Verbindung bildet, die kräfteübertragend und ergänzt durch die horizontalen Klebefügungen im Bereich der Stirnwand (12) und der Windlauf (13) mit der Karosseriestruktur zusammenwirken.

2. Kraftfahrzeug-Windlauf-Armaturenbrett-Bauteil nach Anspruch 1, dadurch gekennzeichnet, daß ein an sich bekannter auf einer Lenksäulanordnung (42) und einer Pedalanordnung vormontierter Pedalbock über eine erste Befestigungslasche (44) von unten an das erste Bauteil (2) in Verbindung mit einer an der Oberseite des ersten Bauteiles (2) angeordneten zweiten Befestigungslasche (45) vormontiert wird, wobei nach dem Einschieben der beiden komplettierten, miteinander verbundenen ersten und zweiten Bauteile (2 und 3) in die Karosseriestruktur der die Lenksäulenanordnung (42) und die Pedalanordnung (43) tragende Pedalbock oben am Windlauf über die zweite Befestigungslasche (45) und unten an der Spritzwand über den Pedalbock-Befestigungsflansch an der Karosseriestruktur befestigt wird.

3. Kraftfahrzeug-Windlauf-Armaturenbrett-Bauteil nach Anspruch 1 und 2, dadurch gekennzeichnet, daß eine an sich bekannte Lenksäulenanordnung (42) mit einem Querträger (46), der im Bauteil (2) integriert ist, lösbar vormontiert und verbunden wird und ein separater Pedalbock (43) von unten gegen das Bauteil (3) vormontiert wird.

4. Kraftfahrzeug-Windlauf-Armaturenbrett-Bauteil nach Anspruch 1, dadurch gekennzeichnet, daß an der obenliegenden Seite des ersten Bauteiles (2) das Gebläsegehäuseunterteil (17), das Umluft Klimaanlage-Gehäuse (18/19) und der zur Verklebung am Windlauf oben im Bereich (15) vorgesehene Steg und an der untenliegenden Seite die obere Hälfte des Heizungsgehäuses (16) angeformt sind, während an der obenliegenden Seite des zweiten Bauteiles (3) die untere Hälfte des Heizungsgehäuses (34) mit Luftführungskanälen (39 und 40) und dem Luftverteilergehäuse (49) und an der außenliegenden Seite ein Handschuhkasten (35) und Ablagefächer engeformt sind.

5. Kraftfahrzeug-Windlauf-Armaturenbrett-Bauteil nach Anspruch 1, dadurch gekennzeichnet, daß zusätzlich zu dem ersten und zweiten tragenden Bauteil, dem Mittelträgerbauteil (2) und dem Unterträger-Bauteil (3) lediglich zwei abdeckende Bauteile, eine Gebläseabdeckung (4) bzw. zusätzlich eine Umluft- und Klimaanlage-Abdeckung (4') und eine den Sicherheitsanforderungen entsprechende Armaturenbrettabdeckung (5) hinzuzufügen sind.

6. Kraftfahrzeug-Windlauf-Armaturenbrett-Bauteil nach Anspruch 4, dadurch gekennzeichnet, daß die Gebläseabdeckung (4) sowie die Umluft-Klimaanlage-Abdeckung (4') vorzugsweise aus unverstärktem Polyurethan-Hartschaumstoff besteht.

7. Kraftfahrzeug-Windlauf-Armaturenbrett-Bauteil nach Anspruch 4, dadurch gekennzeichnet, daß die Armaturenbrettabdeckung (5) aus einem Trägerteil (60) vorzugsweise aus faserverstärktem Polyurethan-Hartschaumstoff besteht, in das Teile von Luftleitkanälen (61) mit eingeformt sind, die von einem Ergänzungsteil (63) geschlossen werden.

8. Kraftfahrzeug-Windlauf-Armaturenbrett-Bauteil nach den Ansprüchen 1 bis 7, dadurch gekennzeichnet, daß zwischen die beiden tragenden Bauteile (2 und 3) eingesetzte Bauteile, wie eine Heizungszwischenwand (47) und ein Luftverteilungsgehäuse (50) vorzugsweise aus unverstärktem Polyurethan-Hartschaum bestehen.

9. Kraftfahrzeug-Windlauf-Armaturenbrett-Bauteil nach den Ansprüchen 1 bis 8, dadurch gekennzeichnet, daß weitere Ergänzungsbauteile, wie Luftführungskanäle (27 und 28) und Luftverteilungskanäle (52) vorzugsweise aus unverstärktem Polyurethan-Hartschaumstoff bestehen.

10. Kraftfahrzeug-Windlauf-Armaturenbrett-Bauteil nach den Ansprüchen 1 bis 9, dadurch gekennzeichnet, daß die im Bereich der Belüftungs- Heizungs- und Klimaanlage angeordneten Steuerungsklappen (20, 23 und 51) vorzugsweise aus unverstärktem Polyurethan-Hartschaum bestehen.

11. Kraftfahrzeug-Windlauf-Armaturenbrett-Bauteil nach den Ansprüchen 1 bis 10, dadurch gekennzeichnet, daß Verschlußbauteile, wie eine Handschuhkastenklappe (53) vorzugsweise aus faserverstärktem Polyurethan-Hartschaum bestehen.

12. Kraftfahrzeug-Windlauf-Armaturenbrett-Bauteil nach den Ansprüchen 1 bis 3, dadurch gekennzeichnet, daß im zweiten Bauteil (2) im Bereich des Heizungsgehäuseunterteiles (34) seitliche Öffnungen (41) vorgesehen sind, durch die der eingesetzte Wärmetauscher (33) nach Lösen der Schlauch-Verbinder (78) und Entfernen der an der Stirnwand (75) in einer Öffnung (76) eingesetzten becherförmigen Teiles (77) in Richtung der Anschlußplatte (48) zum Austausch entnehmbar ist.

13. Kraftfahrzeug-Windlauf-Armaturenbrett-Bauteil nach den Ansprüchen 1 bis 3, dadurch gekennzeichnet, daß die an den Karosserie-Innenwänden vorgesehenen Kanalführungen (10) einen U-förmigen Querschnitt mit einer vorgelagerten Stufe aufweisen und die an den seitlichen Rändern der verbundenen Bauteile (2 und 3) ausgebildeten Wulst- oder Keilkanten (8 und 9) einen unregelmäßigen H-Querschnitt bilden.

## Claims

1. A motor vehicle scuttle-dash instrument panel component (1) of plastics material having an integrated ventilating and heating unit which comprises a first part (2) extending between the inner walls of the bodywork with integrally formed hollows and walls for the reception of components of the ventilating and heating unit and a second part (3) likewise extending between inner walls with correspondingly matched shaped hollows and walls, which when the two parts are adjacent form spaces and channels of specific shape, the first part (2) and the second part (3) being inserted in the bodywork as a pre-assembled structural member supplemented by the corresponding components of the ventilating and heating unit (16 to 19) and additional covering components and being connected to the inner walls of the bodywork by way of lateral flanges, characterized in that both the first part (2) and the second part (3) are preferably constructed as fibrereinforced rigid polyurethane foam material moulded articles, the first part (2) essentially reinforcing the strength of the bodywork structure and both parts being provided in their peripheral regions with surfaces which lie in a substantially horizontal junction plane (6) and which are adjacent to each other and are securely joined to each other by means of adhesive (7), so that the two parts (2 and 3) form a box-shaped transverse support which is provided on the lateral edges lying in the approximately horizontal junction plane (6) with beador wedge-shaped edges (8/9) which are received inserted approximately horizontally in guide channels (10) with an appropriate cross-section provided on the inner walls (11) of the bodywork, and by filling the channels (10) by means of reactive synthetic resin adhesive (7) forms a positive adhesively joined connexion which cooperates with the bodywork structure in a force-transmitting manner and supplemented by the horizontal adhesive joints in the region of the end walls (12) and the scuttle-dash (13).

2. A motor vehicle scuttle-dash instrument panel component according to Claim 1, characterized in that a pedal block known per se which is pre-assembled from a steering column arrangement (42) and a pedal arrangement is pre-assembled from below by way of a first mounting strap (44) on the first part (2) in conjunction with a second mounting strap (45) disposed on the upper side of the first part (2), and after the two completed and interconnected first and second parts (2 and 3) have been inserted in the bodywork structure the pedal block supporting the steering column arrangement (42) and the pedal arrangement (43) is secured at the top to the scuttle-dash by way of the second mounting strap (45) and at the bottom on the dashboard by way of the pedal block mounting flange on the bodywork structure.

3. A motor vehicle scuttle-dash instrument panel component according to Claims 1 and 2, characterized in that a steering column arrangement (42) known per se is detachably pre-assembled and joined to a transverse support (46) which is integrated in the part (2), and a separate pedal block (43) is pre-assembled from below against the part (3).

4. A motor vehicle scuttle-dash instrument panel component according to Claim 1, characterized in that on the upper side of the first part (2) are integrally formed the blower casing lower part (17), the return-air air-conditioning casing (18/19) and the web provided for adhesion to the top of the scuttle-dash in region (15) and the upper half of the heating casing (16) is integrally formed on the lower side, while on the upper side of the second part (3) are integrally formed the lower half of the heating casing (34) with air guide ducts (39 and 40) and the air distributor casing (49) and on the outside is formed a glove compartment (35) and pockets.

5. A motor vehicle scuttle-dash instrument panel component according to Claim 1, characterized in that, in addition to the first and second supporting part, the central supporting part (2) and the lower supporting part (3), only two covering parts, a blower cover (4) and in addition a return-air and air-conditioning cover (4') and an instrument panel covering (5) meeting safety requirements should be added.

6. A motor vehicle scuttle-dash instrument panel component according to Claim 4, characterized in that the blower cover (4) and the return-air air-conditioning cover (4') preferably consist of rigid non-reinforced polyurethane foam material.

7. A motor vehicle scuttle-dash instrument panel component according to Claim 4, characterized in that the instrument panel cover (5) consists of a support member (60) preferably of rigid fibre-reinforced polyurethane foam material in which parts of air guide ducts (61) are integrally formed which are closed by a supplementary part (63).

8. A motor vehicle scuttle-dash instrument panel component according to Claims 1 to 7, characterized in that components, such as a heating partition wall (47) and an air distributor casing (50), inserted between the two supporting parts (2 and 3) preferably consist of rigid non-reinforced polyurethane foam material.

9. A motor vehicle scuttle-dash instrument panel component according to Claims 1 to 8, characterized in that further supplementary components, such as air guide ducts (27 and 28) and air distribution ducts (52), preferably consist of rigid non-reinforced polyurethane foam material.

10. A motor vehicle scuttle-dash instrument panel component according to Claims 1 to 9, characterized in that the control flaps (20, 23 and 51) disposed in the region of the ventilating, heating and air-conditioning unit preferably consist of rigid non-reinforced polyurethane foam material.

11. A motor vehicle scuttle-dash instrument panel component according to Claims 1 to 10, characterized in that closure components, such as a glove compartment flap (53) preferably consist of rigid fibre-reinforced polyurethane foam material.

12. A motor vehicle scuttle-dash instrument panel component according to Claims 1 to 3, characterized in that in the second part (2) in the region of the heating casing lower part (34) are provided lateral openings (41) through which the inserted heat exchanger (33) can be withdrawn in the direction of the connexion plate (48) after the release of the tube connector (78) and the removal of the cup-shaped portion (77) inserted in an opening (76) on the end wall (75).

13. A motor vehicle scuttle-dash instrument panel component according to Claims 1 to 3, characterized in that the guide channels (10) provided on the inner walls of the bodywork have a U-shaped cross-section with a previously inserted stage and the bead- or wedge-shaped edges (8 and 9) formed on the lateral edges of the connected parts (2 and 3) form an irregular H-shaped cross-section.

**Revendications**

1. Elément de tableau de bord et allège de véhicule automobile (1) en matière plastique comportant une installation de ventilation et de chauffage intégrée, constitué d'un premier élément constitutif (2) s'étendant entre les parois internes de la carrosserie avec logements moulés et parois destinés a recevoir des composants de l'installation de ventilation et de chauffage, et d'un deuxième élément constitutif (3) s'étendant aussi entre les parois latérales avec logements et parois de forme complémentaire qui lorsque les deux éléments constitutifs sont appliqués l'un contre l'autre, forment des logements et des conduits d'un parcours défini, le premier (2) et le deuxième (3) éléments constitutifs étant introduits dans la carrosserie sous la forme d'un élément constitutif prémonté complété par les composants correspondants de l'installation de ventilation et de chauffage (16 - 19) ainsi que par d'autres éléments de couverture, et assemblés par des brides latérales aux parois internes de la carrosserie, caractérisé en ce que le premier élément constitutif (2) et le deuxième élément constitutif (3) sont de préférence des éléments moulés en mousse rigide de polyuréthane renforcée aux fibres, le premier élément constitutif (2) assurant le complément principal de rigidité de la structure de la carrosserie et les deux éléments étant pourvus dans leurs zones de pourtour de surfaces situées dans un plan de séparation (6) à peu près horizontal, surfaces qui sont appliquées l'une contre l'autre et assemblées rigidement par de la colle (7), de telle sorte que les deux éléments constitutifs (2 et 3) forment une poutre transversale en caisson qui est pourvue sur les bords latéraux situés dans le plan de séparation (6) horizontal, de bords en bourrelets ou en coins (8/9) qui sont introduits à peu près horizontalement dans des voies de conduit (10) de section transversale appropriée, disposées dans les parois de carrosserie (11) et forment un assemblage collé géométrique, par remplissage des conduits (10) avec un produit réactif pour joints (7) en résine synthétique, qui coopèrent avec la structure de la carrosserie, dans la zone de l'auvent (12) et de l'allège (13), en transmettant les efforts avec le soutien des joints collés horizontaux.

2. Elément de tableau de bord et allège de véhicule selon la revendication 1, caractérisé en ce qu'un support de pédale connu en soi, constitué d'un dispositif de colonne de direction (42) et d'un dispositif de pédale est prémonté par l'intermédiaire d'une première patte de fixation (44) à partir du bas sur le premier élément constitutif (2), en liaison avec une deuxième patte de fixation (45) disposée sur la face supérieure du premier élément constitutif (2), après introduction dans la structure de la carrosserie des deux éléments constitutifs (2 et 3) complétés, assemblés entre eux, le support de pédale portant le dispositif de colonne de direction (42) et le dispositif de pédale (43) étant fixé à la structure de la carrosserie, à la partie supérieure sur l'allège par la deuxième patte de fixation (45) et à la partie inférieure sur l'auvent par la bride de fixation du support de pédale.

3. Elément de tableau de bord et allège de véhicule automobile selon la revendication 1 et 2, caractérisé en ce qu'un dispositif de colonne de direction (42) connu en soi est prémonté de manière amovible et assemblé à une poutre transversale (46) intégrée à l'élément constitutif (2) et en ce qu'un support de pédale (43) séparé est prémonté à partir du bas en direction de l'élément constitutif (3).

4. Elément de tableau de bord et allège de véhicule automobile selon la revendication 1, caractérisé en ce que la partie inférieure du coffret de ventilateur (17), le coffret de climatisation et de circulation d'air (18/19) et la patte prévue pour le collage sur l'allège, à la partie supérieure de la zone (15) sont formés sur la face supérieure du premier élément constitutif (2), et la moitié supérieure du coffret de chauffage (16) est formée sur la face inférieure, tandis que sur la face supérieure du deuxième élément constitutif (3), sont formés la moitié inférieure du coffret de chauffage (34) avec les conduits d'air (39 et 40) et le répartiteur d'air (49), et en ce qu'une boîte à gants (35) et un vide-poches sont formés sur la face externe.

5. Elément de tableau de bord et allège de véhicule automobile selon la revendication 1, caractérisé en ce qu'en plus du premier et du deuxième éléments constitutifs porteurs, de l'élément de poutre centrale (2) et de l'élément de poutre inférieure (3), il est prévu uniquement deux éléments de couverture, une protection de ventilateur (4) ou en supplément une protection (4') d'installation de circulation d'air et de climatisation et une protection de tableau de bord (5) conforme aux prescriptions de sécurité.

6. Elément de tableau de bord et allège de véhicule automobile selon la revendication 4, caractérisé en ce que la protection de ventilateur (4) ainsi que la protection d'installation de climatisation et de ventilation d'air (4') est faite de préférence dans une mous se rigide de polyuréthane non renforcée.

7. Elément de tableau de bord et allège de véhicule automobile selon la revendication 4, caractérisé en ce que la protection de tableau de bord 5 est constituée d'un élément de support (60) fait de préférence dans une mousse rigide de polyuréthane renforcée aux fibres, dans lequel sont formés des éléments de conduits d'air (61) qui sont fermés par un élément complémentaire (63).

8. Elément de tableau de bord et allège de véhicule automobile selon les revendications 1 à 7, caractérisé en ce qu'il est prévu entre les deux éléments constitutifs (2 et 3) porteurs des éléments constitutifs insérés tels qu'une cloison intermédiaire de chauffage (47) et un répartiteur d'air (50), de préférence en mousse rigide de polyuréthane non renforcée.

9. Elément de tableau de bord et allège de véhicule automobile selon les revendications 1 à 8, caractérisé en ce que d'autres éléments complémentaires tels que des conduits d'acheminement (27 et 28) et des conduits de répartition d'air (52) sont réalisés de préférence dans une mousse rigide de poluyréthane non renforcée.

10. Elément de tableau de bord et allège de véhicule automobile selon les revendications 1 à 9, caractérisé en ce que les volets de commande (20, 23 et 51) disposés dans la zone de l'installation de ventilation, de chauffage et de climatisation sont de préférence réalisés dans une mousse rigide de polyuréthane non renforcée.

11. Elément de tableau de bord et allège de véhicule automobile selon les revendications 1 à 10, caractérisé en ce que des éléments de fermeture tels qu'un abattant de boîte à gants (53) sont réalisés de préférence dans une mous se rigide de polyuréthane renforcée aux fibres.

12. Elément de tableau de bord et allège de véhicule automobile selon les revendications 1 à 3, caractérisé en ce qu'il est prévu dans le deuxième élément constitutif (2), dans la zone de la partie inférieure du cof fret de chauffage (34), des ouvertures (41) latérales à travers lesquelles l'échangeur de chaleur (33) monté peut être enlevé pour échange, dans la direction de la platine de branchement (48), après détachement des raccords pour tuyaux (78) et dépose de l'élément (77) en forme de godet placé sur l'auvent (75) dans une ouverture (76).

13. Elément de tableau de bord et allège de véhicule automobile selon les revendications 1 à 3, caractérisé en ce que les voies de conduit (10) prévues dans les parois internes de la carrosserie ont une section transversale en U avec un palier placé à l'avant, et en ce que les bords en bourrelet et en coin (8 et 9) formés sur les bords latéraux des éléments constitutifs (2 et 3) assemblés, forment une section transversale irrégulière en H.

FIG. 1

FIG.2

FIG.2a

FIG.2b

FIG. 3

FIG. 4

0185 856

FIG.5

FIG.5a

FIG.5b

FIG.6

FIG. 6a

FIG. 6b

FIG.7